(19) **Europäisches Patentamt / European Patent Office / Office européen des brevets**

(11) **EP 3 598 880 B1**

(12) **EUROPEAN PATENT SPECIFICATION**

(45) Date of publication and mention
of the grant of the patent:
**25.05.2022 Bulletin 2022/21**

(21) Application number: **19184133.7**

(22) Date of filing: **03.07.2019**

(51) International Patent Classification (IPC):
**A01B 33/16** *(2006.01)*    **A01B 35/32** *(2006.01)*
**A01B 79/00** *(2006.01)*    **A01B 63/111** *(2006.01)*

(52) Cooperative Patent Classification (CPC):
**A01B 33/16; A01B 35/32; A01B 63/1112;**
**A01B 79/00**

(54) **CONTROL AND COMMAND SYSTEM AND METHOD FOR AGRICULTURAL MACHINES**

STEUER- UND BEFEHLSSYSTEM UND VERFAHREN FÜR LANDWIRTSCHAFTLICHE
MASCHINEN

SYSTÈME DE CONTRÔL ET DE COMMANDE ET PROCÉDÉ POUR MACHINES AGRICOLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2018 IT 201800006958**

(43) Date of publication of application:
**29.01.2020 Bulletin 2020/05**

(73) Proprietor: **Torrico S.r.l.**
**36053 Gambellara (VI) (IT)**

(72) Inventors:
 • **PEGORARO, Giovanni**
 **36053 GAMBELLARA (VI) (IT)**

 • **ZAMBON, Mattero**
 **36053 GAMBELLARA (VI) (IT)**

(74) Representative: **Burchielli, Riccardo et al**
**Barzano & Zanardo Roma S.p.A.**
**Via Piemonte 26**
**00187 Roma (IT)**

(56) References cited:
**EP-A1- 0 776 598    EP-A1- 2 630 854**
**WO-A2-00/03583    DE-A1-102010 027 265**
**DE-U1- 8 714 440    GB-A- 2 141 611**
**GB-A- 2 184 331**

**Description**

The present invention generally relates to an electronic system for monitoring and actuating agricultural machines for soil processing.

In particular, the system is mainly devoted to machines equipped with a power take-off (harrows, milling machines, rotary cultivators, etc.) but it can also be used for passive processing machines, such as plows, subsoilers, trailed cultivators, etc.

The system involves the use of various types of electronic components, such as sensors of various types (ultrasounds, inclinometers, temperature probes, inductive sensors, load cells), as well as solenoid valves for operating hydraulic systems and electric actuators.

All said components communicate on a BUS network, therefore with a single cable it is possible to reach all the parts of the machine without having a complex wiring.

The BUS network is particularly suitable for said machines because said BUS network allows to add a lot of electronic components without changing the wiring, but only by adding parts; this feature gives the system a relevant modularity, so that the system can be adapted to various types of machines and/or to various measures and to different technological levels.

A handheld control monitor, placed in the cab of the agricultural machine and connected to a 12 Volt DC socket, allows connection, via an application software and via a BUS cable, to the system where the sensors are located. It is also possible to insert a control unit of the system's utilities to control respective solenoid valves for managing hydraulic movements; therefore, a single hydraulic connection to the agricultural machine is enough to manage several users.

Furthermore, instead of using the control monitor, a communication module can be used, which allows a direct communication with the electronic system of the agricultural machine; all data can be collected and managed by a remote and sharing transmission system (in cloud).

The electronic systems mentioned above are advantageously usable for generic agricultural machines, which are equipped with a rotor shaft with a plurality of blades rotating around their own axis, so that when the rotor shaft approaches the ground and is rotated around its own axis, the blades are able to work the soil.

Different processes can be obtained by using said agricultural machines equipped with blades and having different shapes and extensions and operated at selected speeds and rotation directions, in order to perform a hoeing or a refinement of the soil or a burial operation of stones, etc.

For example, a harrow (also called crusher) is an agricultural machine brought or pulled by a tractor and used for complementary works in agriculture. In particular, the harrow is used, after plowing, to crush the clods and to break up the soil for sowing; in other cases, the harrow is also able to bury the fertilizer spread on the ground and/or to break the turf. Similarly, a rotary harrow is a machine that is very similar to a cutter and its mechanical action on the soil, suitable for crushing the clods, is not due to the dragging but to the rotation given by the tractor's power take-off to horizontal drums equipped with vertical teeth (knives).

A first practical application of the above mentioned electronic system is really carried out on the rotary harrow and the following activities can be monitored:

- controlling the temperature of the transmission box;
- controlling revolutions at the entrance of the transmission box, so as to identify incorrect rotation regimes operated by the user and to identify any stoppages of the torque limiters;
- signaling to the user important or critical information, such as counting of actual, partial or total working hours, sending alarm signals related to the exceeding of preset temperature thresholds, sending alarms related to the stopping of torque limiters, signaling recommended maintenance based on the working hours;
- recording useful information for post-sales assistance (alarms, counts, etc.).

The problem underlying the present invention is to propose an agricultural machine and, in particular, a rotary harrow, more versatile and efficient than traditional agricultural equipments, thanks to the use of a particularly effective electronic control and actuating system.

A control and command system and method for agricultural machines, with technical features that can be considered the closest state of the art to the following invention, features that are present in the preamble of the attached claim 1, are described, for example, in the patent documents DE102010027265A1 (D1), EP0776598A1 (D2), WO00/03583A2 (D3), EP2630854A1 (D4), GB2141611A (D5), DE8714440U1 (D6) and GB2184331A (D7).

Within the scope of the above mentioned requirements, it is an object of the present invention to propose an agricultural machine and, in particular, a rotary harrow, which incorporates a particularly efficient system and method for controlling the working depth and the state of wear of the machine tools. Another object of the present invention is to provide an agricultural machine equipped with an electronic control system which can be used to check and control the working depth, the depth of the refining bar, the opening and closing of the machine, the exclusion of the seeding bar and/or the management of the row discs, all of said operations being performed directly from a monitor provided on the tractor.

Another object of the invention is to propose an agricultural machine and, in particular, a rotary harrow, equipped with an electronic control system that can be directly viewed by the user on a monitor available on the tractor. This object, as well as other objects that will become more clear hereinafter, are achieved by a control and command system for agricultural machines according to the attached claim 1.

Other detailed features of the control and command system according to the invention are included in the dependent claims.

Further characteristics and advantages of the invention will become more clear from the description of a preferred but not exclusive embodiment of a control and command system for agricultural machines, according to the present invention, illustrated only by way of non-limitative example in the following drawings, in which:

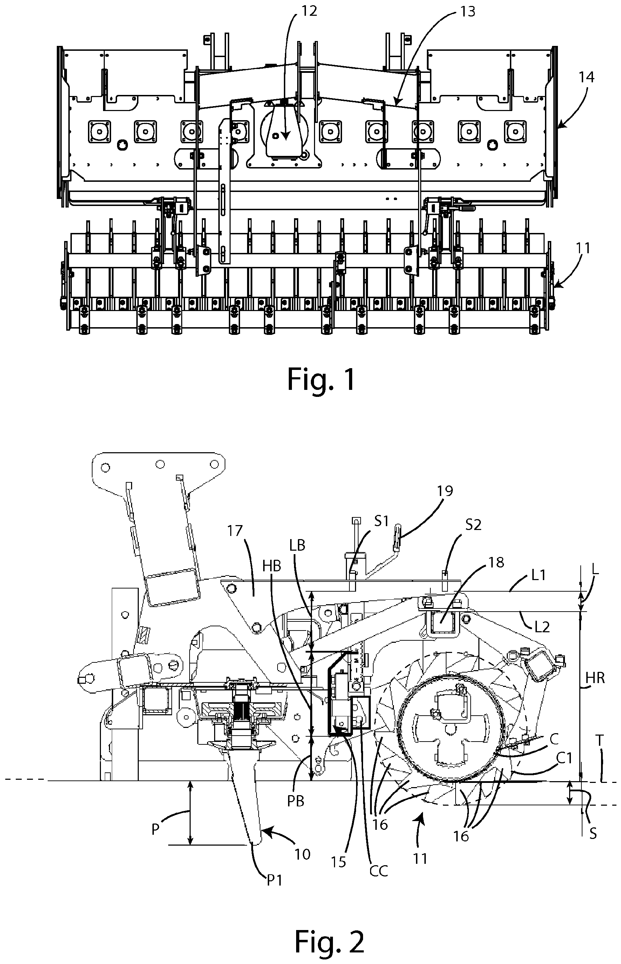

- fig. 1 shows a top plan view of an agricultural machine, in particular a rotary harrow, equipped with an electronic control and command system, according to the invention;
- fig. 2 shows an enlarged side view of the agricultural machine of fig. 1, according to the present invention;

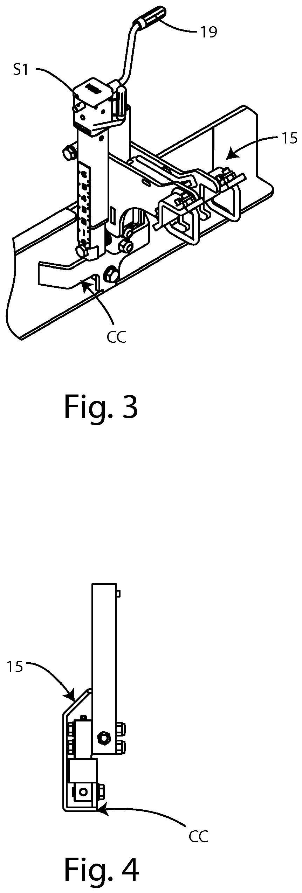

- fig. 3 e 4 show respectively a perspective view and a side view of an enlarged detail of the agricultural machine of fig. 1 and 2, according to the present invention.

With particular reference to the above mentioned figures, which show the preferred embodiment of a rotary harrow equipped with an electronic control and command system according to the present invention, said agricultural machine, which is operated by a tractor, comprises a series of tools 10, such as subsoilers or scarifiers, that are capable of shredding the soil at low depths, said tools 10 being connected to a floating roller 11, mounted on a frame shaped as a parallelogram, and/or to rear packing rollers shaped as a cage, a spiral and/or with spikes; the above structure provides an optimal soil tillage and the best conditions for a simultaneous or subsequent possible passage of a seeding machine.

Advantageously, the agricultural machine generally has a three-point power socket 12 for a mechanical and electrical connection to the tractor, a transmission 13 with three gear shifts and a central speed change, and a foldable load-bearing frame 14, which limits the overall dimensions during transport and allows a more fast and safe road driving.

Moreover, said agricultural machine can also have a rear coupling for a mechanical connection of a sowing machine, so as to sowing the soil immediately after working it.

The electronic control and command system and the method thereof, which are the objects of the present invention, allow in particular to control the instantaneous working depth P of the tools 10.

According to said control method, an initial basic condition is provided, according to which the agricultural machine is arranged in a perfect horizontally direction on a rigid plane (for example, made of concrete), with the outermost circumference of the roller 11 (corresponding to the circumference C if the roller 11 is a smooth or flat type roller, or corresponding to the circumference C1 connecting the outermost points of the spikes of the roller 11 if said roller 11 is equipped with spikes 16) contacting a reference plane and with the tools 10 protruding beyond said reference plane (since they are configured to be inserted into the ground). In particular, according to said initial reference condition, the instantaneous working depth P is defined as the distance between the reference plane, which preferably corresponds to the surface level T of the ground, and the most extreme point P1 between the tools 10 positioned beyond the reference plane and inserted into the ground.

In order to place the agricultural machine in said initial reference condition, an angular sensor (not shown) is used, which allows the user to adjust the machine in a horizontal position by acting on a tie-rod of the three-point attachment connection 12 for connecting the machine to the tractor.

In said initial reference condition, a sensor S2, preferably an ultrasonic sensor, measures the height difference L, with respect to the surface level of the ground T (above the soil), between a horizontal level L1 of a first reference or fixed support 17 of the frame 14 coupled with the agricultural machine (machine position reference) and a horizontal level L2 of a second reference or fixed support 18 of the frame coupled with the roller 11 (roller position reference); in particular, the above references 17, 18 of the agricultural machine and of the roller 11 may be chosen as any points, respectively, of the agricultural machine and of the roller 11, with respect to a fixed reference, such as the surface level of the ground T, since the measurement that matters, that is to say the height difference L, is the difference between the levels L1 and L2.

The same sensor S2, which is preferably connected to the support 17 and which is preferably arranged perpendicularly to the horizontal levels L1, L2 to be measured, is used to measure the same height difference L, with respect to the ground level T, in successive times, for example at the end of a working day.

The electronic control and command system, according to the invention, therefore stores the measurement of the LM level (measurement of the reference height L or zero machine with the machine resting on the ground) and provides for measuring L (instantaneous measurement of the height difference performed at each working time).

Since the instantaneous measurement of the height L is proportional to the instantaneous measurement of the working depth P and to the sinking measure S of the roller 11 beyond the surface level of the ground T (equal to the height of the spikes of the roller 11 and possibly equal to zero when flat or smooth rollers 11 are used), it follows that the instantaneous measurement of the working depth P is equal to:

$$(LM - L) + S.$$

If the measurement of LM is equal to L, then the difference between the initial measurement and the instantaneous measurement of the working depth P (without taking into account the sinking measure S) is zero and therefore there are no depth variations and no wear of the tools 10 can be detected.

If, on the other hand, there are differences between the initial and instantaneous stored measurements of the working depth P, said measurement differences detected by the electronic control system can be advantageously used by the same electronic control system to determine the wear of the tools 10, because the instantaneous measurement of the working depth P is equal to at least a portion of height of the tool 10, and/or to instantly verify the working depth P and to eventually restore certain conditions of depth, through a special control algorithm.

In this way, it is possible to control the inclination of the agricultural machine during the work and the instantaneous working depth P and it is also possible to set a measurement of the working depth based on the consumption of the tools 10.

If a refining or leveling bar is used in the agricultural machine, as in case of a rotary harrow is used, said refining or leveling bar 15 is a decisive element for the working quality of the agricultural machine, since said bar 15 is configured to hold the soil inside the working chamber of the machine, thus increasing the refinement of the worked soil; the refining or leveling bar 15, which can be directy connected to the roller 11 and which is fixed parallel to and in front of said roller 11, with respect to the travelling direction of the machine, allows the soil to be retained for a better shredding phase and, therefore, it is advantageous to provide a height control function of said bar 15 so as to obtain an efficient processing.

In fact, an improper use of the bar 15 (too much raised from the ground or, on the contrary, inserted too deeply into the ground) leads to inadequate processing or excessive power absorption and, therefore, to an useless consumption or even a final locking of the machine.

It follows that the detection of the height position of the bar 15 is a very sensitive operation, which is normally entrusted to the experience and sensitivity of the user.

According to the present invention, it is envisaged to set a load on the refining bar 15, said load being detectable by one or more load cells CC positioned between the bar 15 and the supports, in such a way that, through the control system of the present invention and on the basis of the characteristics of the ground to be worked (consistency, type, humidity, etc.), it is possible to insert a predetermined load and therefore to know directly (in the tractor cabin, through a display screen of the system) the load supported by the bar 15; therefore, by simply operating pushbuttons of a handheld device supplied with the control system, the user can change the instantaneous height position of the bar 15 and instantly detect the load value.

Still according to the invention, a second sensor S1, preferably an ultrasonic sensor, is used to detect the instantaneous measurement of the distance LB, taken between the horizontal level L1 and the upper level of the refining bar 15; moreover, the height HR, taken between the horizontal level L2 and the surface level of the ground T, and the height HB of the bar 15 are constant values which are firstly set in the system. It follows that the height PB, taken between the lower end of the bar 15 and the surface level of the ground T, is equal to

$$(HR + L) - (LB + HB)$$

and that said height PB changes depending on the load detected by the load cells CC.

Therefore, it is possible to raise or lower the bar 15 according to the calculated value of the height PB.

The height movement of the bar 15 can be carried out manually, by means of a suitable lever 19; alternatively, it is also possible to set an automatic control method, according to which, after the user has defined a predetermined load on said bar 15, the control system automatically rectifies the height of the bar 15 while keeping constant the load.

It is therefore understood that the control and command system of an agricultural machine, according to the invention, achieves the intended aim and objects, thus allowing an easy control of the working depth and of the wear of tools, simply by showing the above mentioned measures on a special display placed on the tractor and available to the user.

The invention thus conceived is susceptible of numerous modifications and variations, all of which are within the scope of protection of the appended claims.

Moreover, all the details may be replaced by other technically equivalent elements.

In practice, the materials used, as well as the contingent shapes and dimensions, may be varied according to the contingent requirements and the state of the art.

Where the constructive characteristics and the techniques mentioned in the following claims are followed by reference signs or numbers, these reference signs or numbers have been applied with the sole purpose of increasing the intelligibility of the claims themselves and, consequently, they do not constitute a limitation to the interpretation of each element identified by said signs or reference numbers.

**Claims**

1. Control and command system for agricultural machines, in which an agricultural machine has a supporting frame (14), a series of tools (10) configured to shred the ground in depth, which are connected to a roller (11), said roller (11) being smooth or equipped with spikes (16), and a refining or leveling bar (15), which is designed to retain the soil inside a working chamber of the machine so as to increase the refinement of the worked soil and which is fixed parallel to said roller (11) and adjustable in height with respect to a ground level or fixed horizontal reference plane (T), **characterized in that** a load as a result of the use of the device is placed on said refining bar (15), said load being detectable by one or more load cells (CC) positioned between said bar (15) and a first support (17) fixed to said frame (14) of the agricultural machine and a second support (18) fixed to said roller (11), said load being variable according to the type of soil to be worked.

2. Control and command system according to claim 1, **characterized in that** said refining bar (15) is fixed to said roller (11).

3. Control and command system according to at least one of the previous claims, **characterized in that** said system comprises a first sensor (S2), which measures, in a first initial condition according to which said agricultural machine rests on said fixed horizontal reference plane (T), a difference of height (LM), with respect to said fixed reference plane (T), between a

first horizontal level (L1) of said first support (17) fixed to said frame (14) of the agricultural machine with respect to said fixed reference plane (T) and a second horizontal level (L2) of said second support (18) fixed to said roller (11) with respect to said fixed reference plane (T), said sensor (S2) being able to measure instantaneous differences (L) of said height (LM) at successive times with respect to said initial condition, said control system being also able to store said difference of height (LM) and to measure said instantaneous differences of height (L), as well as a sinking measure (S) of said roller (11) beyond said fixed reference plane (T), in order to obtain an instantaneous depth measurement (P) of said tools (10) beyond the fixed reference plane (T).

4. Control and command system according to at least one of the previous claims, **characterized in that** said first sensor (S2) is connected to said first support (17) and is arranged perpendicular to said first and second horizontal levels (L1, L2).

5. Control and command system according to at least one of the previous claims, **characterized in that** said system includes a second sensor (S1) configured to detect an instantaneous distance measure (LB) taken between said first horizontal level (L1) and a higher level of said refining bar (15).

6. Control and command system according to at least one of the previous claims, **characterized in that** said system is configured to count a second height measure (PB), taken between a lower end of said refining bar (15) and said fixed reference plane (T), said second height measure (PB) being computed starting from a first height measure (HR), taken between said second horizontal level (L2) and said fixed reference plane (T), starting from said difference of height (L), starting from said instantaneous distance measure (LB), taken between said first horizontal level (L1) and a higher level of said refining bar (15), and starting from a height measure (HB) of said refining bar (15), said second height measure (PB) being variable as a function of said load of the refining bar (15) detected by the load cells (CC).

7. Control and command system according to at least one of the previous claims, **characterized in that** said first and second sensors (S1, S2) are ultrasonic sensors.

**Patentansprüche**

1. Steuerungs- und Bediensystem für landwirtschaftliche Maschinen, bei dem eine landwirtschaftliche Maschine einen Tragrahmen (14) aufweist, dazu eine Reihe von Werkzeugen (10), die dazu konfiguriert sind, den Boden in der Tiefe zu zerkleinern. Diese sind mit einer Walze (11) verbunden, wobei die Walze (11) glatt oder mit Stacheln (16) ausgestattet ist, und einer Verfeinerungs- oder Einebnungsstange (15), die dazu bestimmt ist, den Boden innerhalb einer Arbeitskammer der Maschine zu halten, um die Verfeinerung des bearbeiteten Bodens zu erhöhen, und die parallel an der besagten Walze (11) befestigt ist und in der Höhe in Bezug auf eine Bodenebene oder eine feste horizontale Vergleichsebene (T) einstellbar, **dadurch gekennzeichnet, dass** eine Last als Ergebnis der Verwendung der Vorrichtung auf die Verfeinerungsstange (15) gelegt wird, wobei die Last durch eine oder mehrere Kraftmessdosen (CC) erfassbar ist, die zwischen der Stange (15) und einem ersten Träger (17) an dem Rahmen (14) der landwirtschaftlichen Maschine und einem zweiten Träger (18) befestigt sind, der an der besagten Walze (11) befestigt ist. Die besagte Last ist veränderlich je nach Bodenart, auf der gearbeitet wird.

2. Steuerungs- und Bediensystem gemäß Anspruch 1, **dadurch gekennzeichnet, dass** die besagte Verfeinerungsstange (15) an der besagten Walze (11) befestigt ist.

3. Steuerungs- und Bediensystem nach mindestens einem der vorhergehenden Ansprüche, **dadurch gekennzeichnet, dass** das System einen ersten Sensor (S2) umfasst, der in einem ersten Anfangszustand, wo die landwirtschaftliche Maschine auf der besagten festen horizontalen Vergleichsebene (T) ruht, eine Höhendifferenz (LM) in Bezug auf die besagte feste Vergleichsebene (T) zwischen einer ersten horizontalen Ebene (L1) des besagten ersten Trägers (17) misst, die an dem besagten Rahmen (14) der landwirtschaftlichen Maschine in Bezug auf diese feste Vergleichsebene (T) befestigt ist, und einer zweiten horizontalen Ebene (L2) des zweiten Trägers (18), der an der besagten Walze (11) befestigt ist, in Bezug auf die feste Vergleichsebene (T), wobei der Sensor (S2) in der Lage ist, momentane Unterschiede (L) der besagten Höhe (LM) zu aufeinanderfolgenden Zeitpunkten in Bezug auf den Anfangszustand zu messen, wobei das Steuersystem auch in der Lage ist, die besagten Höhenunterschiede (LM) zu speichern und die besagten momentanen Unterschiede der Höhe (L) ebenso wie das Maß des Einsinkens (S) der besagten Walze (11) jenseits der besagten festen Vergleichsebene (T) zu messen, um eine momentane Tiefenmessung (P) der besagten Werkzeuge (10) jenseits der festen Vergleichsebene (T) zu erhalten.

4. Steuerungs- und Bediensystem entsprechend wenigstens einem der vorherigen Ansprüche, **dadurch gekennzeichnet, dass** der besagte erste Sensor (S2) mit dem besagten ersten Träger (17) verbunden ist und senkrecht zu den besagten ersten und zweiten horizontalen Ebenen (L1, L2) angeordnet ist.

5. Steuerungs- und Bediensystem entsprechend wenigstens einem der vorherigen Ansprüche, **dadurch gekennzeichnet, dass** das besagte System einen zweiten Sensor (S1) enthält, der konfiguriert ist, um eine momentane Abstandsmessung (LB) zwischen der besagten ersten Ebene (L1) und der höheren Ebene der besagten Verfeinerungsstange (15) zu erkennen.

6. Steuerungs- und Bediensystem nach mindestens einem der vorhergehenden Ansprüche, **dadurch gekennzeichnet, dass** das System so konfiguriert ist, dass es ein zweites Höhenmaß (PB) zählt, das zwischen einem unteren Ende der Verfeinerungsstange (15) und der festen Vergleichsebene (T) genommen wird, wobei das zweite Höhenmaß (PB) ausgehend von einem ersten Höhenmaß (HR) berechnet wird, das zwischen der zweiten horizontalen Ebene (L2) und der festen Vergleichsebene (T) genommen wird, ausgehend von dem besagten Höhenunterschied (L), beginnend von dem momentanen Abstandsmaß (LB), das zwischen dem ersten horizontalen Niveau (L1) und einem höheren Niveau der Verfeinerungsstange (15) genommen wird, ausgehend von einem Höhenmaß (HB) der Verfeinerungsstange (15). Dieses zweite Höhenmaß (PB) ist als Funktion der von den Lastzellen (CC) erfassten Belastung der Verfeinerungsstange (15) variabel.

7. Steuerungs- und Bediensystem nach wenigstens einem der vorherigen Ansprüche, **dadurch gekennzeichnet, dass** die besagten ersten und zweiten Sensoren (S1, S2) Ultraschallsensoren sind.

## Revendications

1. Système de contrôle et de commande pour machines agricoles, dans lequel une machine agricole a un châssis de support (14), une série d'outils (10) configurés pour déchiqueter le sol en profondeur, qui sont reliés à un rouleau (11), ledit rouleau (11) étant lisse ou équipé de pointes (16), et une barre de raffinage ou de nivellement (15), qui est conçue pour retenir le sol à l'intérieur d'une chambre de travail de la machine de manière à augmenter le raffinage du sol travaillé et qui est fixée parallèlement audit rouleau (11) et réglable en hauteur par rapport à un niveau du sol ou à un plan de référence horizontal fixe (T), **caractérisé en ce qu'**une charge résultant de l'utilisation du dispositif est placée sur ladite barre de raffinage (15), ladite charge étant détectable par une ou plusieurs cellules de charge (CC) positionnées entre ladite barre (15) et un premier support (17) fixé audit châssis (14) de la machine agricole et un deuxième support (18) fixé audit rouleau (11), ladite charge étant variable en fonction du type de sol à travailler.

2. Système de contrôle et de commande selon la revendication 1, **caractérisé en ce que** ladite barre de raffinage (15) est fixée audit rouleau (11).

3. Système de contrôle et de commande selon au moins l'une des revendications précédentes, **caractérisé en ce que** ledit système comprend un premier capteur (S2), qui mesure, dans une première condition initiale selon laquelle ladite machine agricole repose sur ledit plan de référence horizontal fixe (T), une différence de hauteur (LM), par rapport audit plan de référence fixe (T), entre un premier niveau horizontal (L1) dudit premier support (17) fixé audit châssis (14) de la machine agricole par rapport audit plan de référence fixe (T) et un deuxième niveau horizontal (L2) dudit deuxième support (18) fixé audit rouleau (11) par rapport audit plan de référence fixe (T), ledit capteur (S2) étant apte à mesurer des différences instantanées (L) de ladite hauteur (LM) à des instants successifs par rapport à ladite condition initiale, ledit système de commande étant également apte à mémoriser ladite différence de hauteur (LM) et à mesurer lesdites différences instantanées de hauteur (L), ainsi qu'une mesure d'enfoncement (S) dudit rouleau (11) au-delà dudit plan de référence fixe (T), afin d'obtenir une mesure de profondeur instantanée (P) desdits outils (10) au-delà du plan de référence fixe (T).

4. Système de contrôle et de commande selon au moins l'une des revendications précédentes, **caractérisé en ce que** ledit premier capteur (S2) est relié audit premier support (17) et est disposé perpendiculairement auxdits premier et deuxième niveaux horizontaux (L1, L2).

5. Système de contrôle et de commande selon au moins l'une des revendications précédentes, **caractérisé en ce que** ledit système comprend un deuxième capteur (S1) configuré pour détecter une mesure de distance instantanée (LB) prise entre ledit premier niveau horizontal (L1) et un niveau supérieur de ladite barre de raffinage (15).

6. Système de contrôle et de commande selon au moins une des revendications précédentes, **caractérisé en ce que** ledit système est configuré pour compter une deuxième mesure de hauteur (PB), prise entre une extrémité inférieure de ladite barre de raffinage (15) et ledit plan de référence fixe (T), ladite deuxième mesure de hauteur (PB) étant calculée à partir d'une première mesure de hauteur (HR), prise entre ledit deuxième niveau horizontal (L2) et ledit plan de référence fixe (T), à partir de ladite différence de hauteur (L), à partir de ladite mesure de distance instantanée (LB), prise entre ledit premier niveau horizontal (L1) et un niveau supérieur de ladite barre de raffinage (15), et à partir d'une mesure de hauteur (HB) de ladite barre de raffinage (15), ladite deuxième mesure de hauteur (PB) étant variable en fonction de ladite charge de la barre de raffinage (15) détectée par les cellules de charge (CC).

7. Système de contrôle et de commande selon au moins l'une des revendications précédentes, **caractérisé en ce que** lesdits premier et deuxième capteurs (S1, S2) sont des capteurs à ultrasons.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010027265 A1
- EP 0776598 A1
- WO 0003583 A2
- EP 2630854 A1
- GB 2141611 A
- DE 8714440 U1
- GB 2184331 A